# EUROPÄISCHE PATENTSCHRIFT

(11) **EP 1 761 753 B1**
(45) Veröffentlichungstag und Bekanntmachung des Hinweises auf die Patenterteilung: **09.03.2011**
(21) Anmeldenummer: 05744860.7
(22) Anmeldetag: 22.06.2005
(51) Int. Cl.: G01M 3/20

(54) **SCHNÜFFELSONDE MIT BELEUCHTUNGSVORRICHTUNG**
SAMPLING PROBE COMPRISING A LIGHTING DEVICE
RENIFLEUR DOTE D'UN DISPOSITIF LUMINEUX

(30) Priorität: 30.06.2004 DE 102004031503
(43) Veröffentlichungstag der Anmeldung: 14.03.2007
(73) Patentinhaber: Inficon GmbH, 50968 Köln (DE)
(72) Erfinder: ROLFF, Randolf, 50169 Kerpen (DE); KILIAN, Ralf, 50999 Köln (DE); LIEBICH, Jörn, 51145 Köln (DE); MOSER, Norbert, 50354 Hürth (DE); ROLFF, Norbert, 50169 Kerpen (DE)
(74) Vertreter: von Kreisler Selting Werner
(86) Internationale Anmeldenummer: PCT/EP2005/051820
(87) Internationale Veröffentlichungsnummer: WO 2006/003037

(56) Entgegenhaltungen:
- WO-A1-01/69126
- DE-A1- 1 573 523
- DE-B- 1 192 851
- US-A- 2 796 757
- US-A- 5 356 594
- US-A1- 2003 079 519

## Beschreibung

Die Erfindung bezieht sich auf eine Schnüffelsonde mit einem Handstück für die Detektion eines Leckgases.

Schnüffelsonden werden zur Ermittlung des Ortes eines Gasaustrittes eingesetzt, beispielsweise eines Gasaustrittes aus dem Kühlkreislauf von Klimaanlagen oder Kühlanlagen in Fahrzeugen und Gebäuden. Das Schnüffel-Handstück weist hierzu eine Gaseintrittsöffnung auf, durch die kontinuierlich Umgebungs-Gas angesaugt wird, das dann im Hinblick auf das Untersuchungs-Gas untersucht wird. Wenn ein Konzentrations-Grenzwert des Untersuchungs-Gases überschritten wird, wird dies von der an die Schnüffelsonde angeschlossenen Detektionsvorrichtung beispielsweise akustisch signalisiert.

Schnüffelsonden werden häufig in schlecht zugänglichen und schlecht oder gar nicht beleuchteten Umgebungen eingesetzt, beispielsweise im Motorraum von Fahrzeugen, Gebäudeschächten etc. Hierbei ist ein schnelles und genaues Folgen und Erkennen der zu untersuchenden Leitungen und Behälter sowie eine genaue Lokalisierung eines Leckortes erschwert. Häufig ist die Benutzung einer Taschenlampe notwendig, was umständlich ist.

Eine Schnüffelsonde nach dem Oberbegriff des Patentanspruchs 1 ist beschrieben in DE 1 573 523 A. Hierbei ist am Ende der Schnüffelleitung eine Anzeigelampe angeordnet, die in distale Richtung leuchtet, wenn ein Leck ermittelt wurde. Die Anzeigelampe kann eine Blitzfrequenz erzeugen, die sich mit der Signalgröße ändert.

WO 01/69126 A1 offenbart ein Handstück eines UV - Lecktesress mit integierter Taschenlampe: US 5, 356, 594 beschreibt eime Schnüffelsonde mit Barcode - Leser im Handstück.

US 2003/0079519 A1 beschreibt einen Gasleckdetektor mit einem Handgerät, dass einen Schnüffelschlauch und eine Schnüffelspitze aufweist, und einem Hauptgerät, das mit dem Handgerät verbunden ist. Das Hauptgerät enthält eine Leuchtquelle in Form einer LED zur Erzeugung eines visuellen Alarms als Antwort auf das Lecksignal.

DE 1 192 851 B beschreibt eine Lecksuchsonde mit einem Handgerät, welches eine Lampe enthält. Das Licht der Lampe gelangt durch eine durchsichtige Wand des Handgerätes nach außen. Die Lampe ist eine Anzeigelampe zum Anzeigen eines Lecks.

U.S. 2,796,757 beschreibt ein Lecktestgerät, das eine Anzeigelampe aufweist. Die Farbe der Flamme der Anzeigelampe ändert sich bei Anwesenheit eines zu detektierenden Gases.

Der Erfindung liegt die Aufgabe zugrunde, eine Schnüffelsonde zu schaffen, die dem Benutzer eine Anzeige über die Messbereitschaft liefert und außerdem die Ausleuchtung schlecht beleuchteter Umgebungen verbessert.

Diese Aufgabe wird erfindungsgemäß mit den Merkmalen des Patentanspruches 1 gelöst.

Die Schnüffelsonde weist erfindungsgemäß an ihrem Handstück eine Beleuchtungsvorrichtung auf. Durch die Beleuchtungsvorrichtung lässt sich die Umgebung der Schnüffelsonde ausleuchten, wenn dies durch den Benutzer gewünscht wird. Durch die Beleuchtungsvorrichtung ist das Arbeiten mit der Schnüffelsonde in schlecht zugänglichen und schlecht beleuchteten Bereichen erheblich vereinfacht. Gegenüber dem Gebrauch einer Taschenlampe bietet die an dem Handstück vorgesehene Beleuchtungsvorrichtung die Vorteile, dass stets zuverlässig die Umgebung des Handstückes ausgeleuchtet wird, und dass der Benutzer dabei eine Hand frei hat.

Vorzugsweise ist die Beleuchtungsvorrichtung derart ausgebildet, dass ausschließlich ein Bereich distal, d.h. axial vor der Gaseintrittsöffnung ausgeleuchtet wird. Durch die ausschließliche Ausleuchtung des Bereiches vor der Gaseintrittsöffnung wird nur der Bereich beleuchtet, in dem die Schnüffelsonde ein Leckgas detektieren kann. Der Benutzer wird veranlasst, die Schnüffelsonde so nah an den Untersuchungsort heranzuführen, dass ein Leckgas am Untersuchungsort auch tatsächlich durch die Schnüffelsonde angesaugt und detektiert werden kann. Ferner wird eine Blendung des Benutzers durch die Beleuchtungsvorrichtung vermieden.

Vorzugsweise wird nur der Bereich vor der Gaseintrittsöffnung ausgeleuchtet, in dem unter den gegebenen Umständen ein Leckgas detektiert werden kann. Beispielsweise kann dies durch eine Beleuchtungsvorrichtung erfolgen, die einen dem Ansaugkegel ungefähr entsprechenden Lichtkegel ausstrahlt.

Gemäß einer bevorzugten Ausgestaltung erfolgt der Lichtaustritt im Bereich der Gaseintrittsöffnung. Hierdurch wird weitgehend eine Blendung des Benutzers vermieden und ausschließlich der Bereich distal der Gaseintrittsöffnung beleuchtet.

Vorzugsweise weist die Beleuchtungsvorrichtung als Lichtquelle eine LED auf, durch die bevorzugt weißes, d.h. annähernd farbloses Licht ausgestrahlt wird. Die als LED ausgebildete Lichtquelle zeichnet sich durch geringe Leistungsaufnahme und relativ geringe Wärmeentwicklung aus. Grundsätzlich kann als Lichtquelle jedoch auch eine Glühleuchte oder eine Gasentladungsleuchte verwendet werden.

Die Lichtquelle kann im Bereich der Schnüffelöffnung angeordnet sein. Alternativ kann die Lichtquelle auch entfernt von dem Uchtaustritt an einem anderen Ort der Schnüffelsonde angeordnet sein, wobei das Licht von der Lichtquelle durch einen an der Schnüffelsonde angeordneten Lichtleiter zum Lichtaustritt gelangt. Der Lichtaustritt kann beispielsweise ringförmig um die Gaseintrittsöffnung herum angeordnet sein, so dass Schattenwurf vermindert oder ausgeschlossen ist.

Der Schnüffelsonde ist ein Messbereitschafts-Schalter zugeordnet, der die Beleuchtungsvonichtung einschaltet, während die Schnüffelsonde messbereit ist, und die Beleuchtungsvorrichtung abschaltet, während die Schnüffeisonde nicht messbereit ist. Hierdurch kann vermieden werden, dass der Benutzer irrtümlicherweise Messbereitschaft und eine Nicht-Anwesenheit von Leckgas annimmt, während die Schnüffelsonde nicht messbereit ist.

Gemäß einer bevorzugten Ausgestaltung ist der Schnüffelsonde ein Grenzwert-Schalter zugeordnet, der die Beleuchtungsvorrichtung derart ansteuert, dass sich die Beleuchtung bei Überschreiten eines Leckgas-Konzentrations-Grenzwertes ändert. Hierdurch wird dem Benutzer unmittelbar optisch angezeigt, dass der Konzentrations-Grenzwert über bzw. unterschritten ist. Beispielsweise kann der Grenzwertschalter bei Überschreiten des Leckgas-Grenzwertes die Farbe der Beleuchtung von Weiß auf Rot ändern. Ebenso kann das Überschreiten des Leckgas-Grenzwertes durch ein Blinken der Beleuchtungsvorrichtung angezeigt werden.

Sowohl der Messbereitschafts-Schalter als auch der Grenzwert-Schalter können in einer separaten Detektionsvorrichtung, können jedoch auch in oder an dem Schnüffel-Handstück selbst angeordnet sein und von der Detektionsvorrichtung entsprechend angesteuert werden. Die Detektionsvorrichtung kann auch an oder in dem Schnüffel-Handstück angeordnet bzw. integriert sein.

Im Folgenden werden unter Bezugnahme auf die Zeichnungen zwei Ausführungsbeispiele der Erfindung näher erläutert.

Es zeigen:
- Fig. 1: ein erstes Ausführungsbeispiel eines Schnüffelsonden-Handstückes mit einer im Bereich der Gaseintrittsöffnung angeordneten Lichtquelle, und
- Fig. 2: ein zweites Ausführungsbeispiel eines Schnüffelsonden-Handstückes mit einer entfernt von der Gaseintrittsöffnung angeordneten Lichtquelle und einem Lichtleiter.

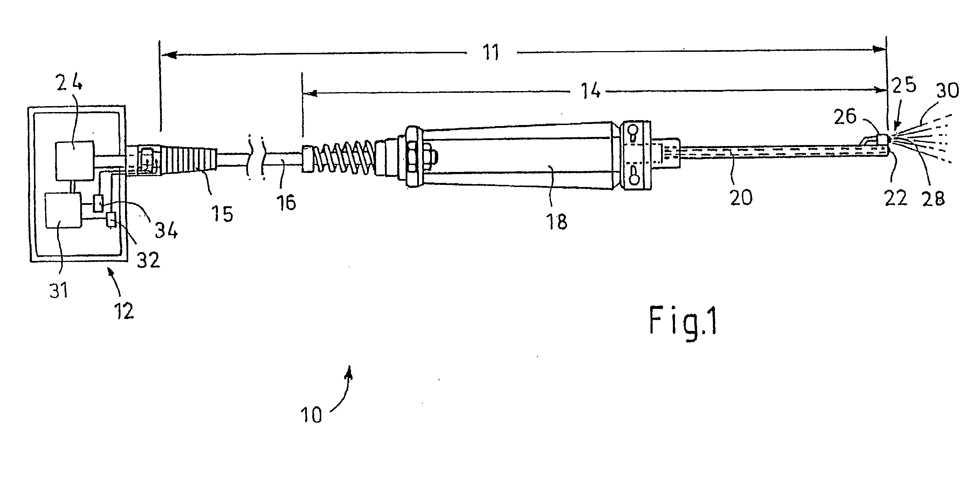

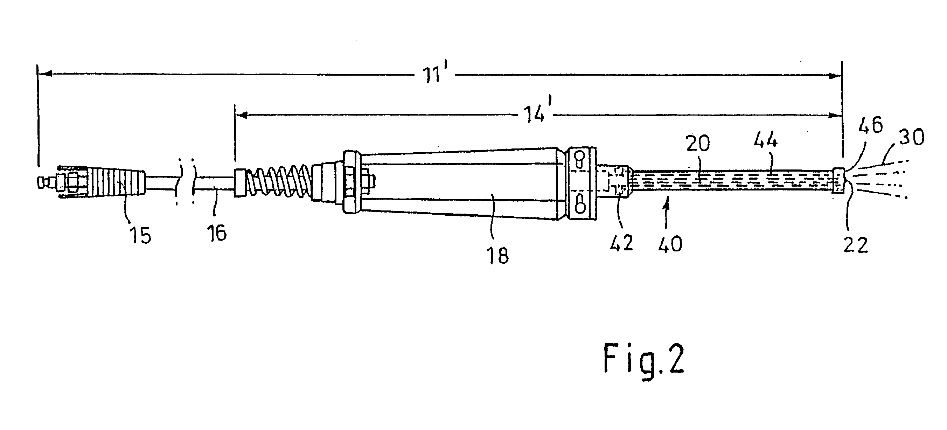

In der Figur 1 ist eine Schnüffelanordnung 10 dargestellt, die im wesentlichen aus einer Schnüffelsonde 11 und einer separaten Detektionsvorrichtung 12 besteht. In der Figur 2 ist eine zweite Ausführungsform einer Schnüffelsonde 11' dargestellt.

Die Schnüffelanordnung 10 dient der Ortsbestimmung eines Gaslecks, aus dem ein Leckgas austritt. Schnüffelanordnungen werden insbesondere eingesetzt, um Undichtigkeiten in Kühlkreisläufen von Kfz-Klimaanlagen, von Kühlschränken etc. aufzufinden.

Die Schnüffelsonde 11 besteht im wesentlichen aus einem Handstück 14 und einer flexiblen Verbindungsleitung 16, die das Handstück 14 mit der Detektionsvorrichtung 12 verbindet. Das Handstück 14 besteht wiederum aus einem Handgriff 18, an dem koaxial ein Schnüffelrohr 20 angebracht ist. Die Verbindungsleitung 16 hat eine Länge von 1 - 20 m, der Handgriff 18 ist ungefähr 20 cm und das Schnüffelrohr 20 5-50 cm lang.

Am vorderen distalen Ende des Schnüffelrohres 20 ist eine Gaseintrittsöffnung 22 angeordnet, durch die das Umgebungs-Gas angesaugt wird. Das Umgebungs-Gas wird durch eine entsprechende Pumpe in der Detektionsvorrichtung 12 angesaugt und gelangt durch eine Gaskapillare in dem Schnüffelrohr 20, dem Handgriff 18 und der Verbindungsleitung 16 in einen Gasdetektor 24 der Detektionsvorrichtung 12. In dem Gasdetektor 24 wird ermittelt, ob das durch die Gaseintrittsöffnung 22 eingesaugte Umgebungs-Gas Leckgas enthält, bzw. wieviel Leckgas anteilig in dem angesaugten Umgebungs-Gas enthalten ist.

Die Schnüffelsonde 11 ist mit einem Stecker 15 lösbar mit der Detektionsvorrichtung 12 verbunden.

An dem die Gaseintrittsöffnung 22 aufweisenden freien Ende des Schnüffelrohres 20 ist als Lichtquelle 26 einer Beleuchtungsvorrichtung 25 eine LED vorgesehen, wobei der Lichtaustritt 28 am distalen Ende des Schnüffelrohres 20 vorgesehen ist. Aus dem Lichtaustritt 28 tritt das von der Lichtquelle 26 erzeugte Licht in Form eines Lichtkegels 30 aus, der einen Kegelwinkel zur Axialen von beispielsweise 10 Grad hat.

Die Detektionsvorrichtung 12 weist eine Steuerungsvorrichtung 31 auf, durch die alle Elemente und Vorgänge der Schnüffelanordnung 10 gesteuert und kontrolliert werden. Die Steuerungsvorrichtung 31 ist mit dem Gasdetektor 24, sowie einem Messbereitschafts-Schalter 32 und einem Grenzwert-Schalter 34 verbunden.

Der Messbereitschafts-Schalter 32 erhält von der Steuerungsvorrichtung 31 ein Messbereitschaftssignal, solange die Schnüffelanordnung 10 zur Messung bereit ist, und erhält ein Nicht-Bereitschaftssignal, wenn die Schnüffelanordnung 10 nicht zur Messung bereit ist, beispielsweise während der Einschaltphase oder bei durch die Steuerungsvorrichtung 31 festgestellten Defekten. Bei Vorliegen eines Messbereitschaftssignales schaltet der Messbereitschafts-Schalter 32 die Beleuchtungsvorrichtung 25 ein, und schaltet sie bei Vorliegen eines Nicht-Bereitschaftssignales wieder aus. Hierdurch wird dem Benutzer deutlich angezeigt, ob die Schnüffelanordnung 10 messbereit ist. Auf diese Weise wird vermieden, dass der Benutzer während der Nicht-Bereitschaft der Schnüffelanordnung 10 annimmt, dass Messbereitschaft vorliegt und in dem Umgebungs-Gas kein Leckgas vorhanden ist.

Der Grenzwert-Schalter 34 schaltet die Beleuchtungsvorrichtung 25 in einen anderen Modus um, sobald ein Grenzwert für die Konzentration des Leckgases überschritten bzw. unterschritten wird. Beispielsweise kann bei Überschreiten des Grenzwertes die Lichtquelle 26 Licht einer anderen Farbe, z:B. Rot statt Weiß ausstrahlen. Alternativ oder ergänzend hierzu kann das von der Lichtquelle ausgestrahlte Licht intermittierend ausgestrahlt werden, während es bei Unterschreiten des Leckgas-Grenzwertes kontinuierlich ausgestrahlt wird. Dadurch wird die Grenzwert-Überschreitung genau dort sichtbar, wo der Benutzer hinschaut und das Gasleck vermutlich zu suchen ist.

Die Schnüffelsonde 11' der Figur 2 unterscheidet sich von der Schnüffelsonde 11 der Figur 1 nur in der Beleuchtungsvorrichtung 40. Die Beleuchtungsvorrichtung 40 am Handstück 14' der Schnüffelsonde 11' der Figur 2 besteht im wesentlichen aus einer Lichtquelle 42, die am distalen Ende des Handgriffes 18 bzw. am proximalen Ende des Schnüffelrohres 20 angeordnet ist, und einem rohrförmigen zylindrischen Lichtleiter 44, der koaxial um das Schnüffelrohr 20 herum angeordnet ist. Der Lichtleiter 44 weist an seinem distalen Ende einen ringscheibenförmigen Lichtaustritt 46 auf, durch den ein Lichtkegel 48 mit einem Kegelwinkel von ungefähr 10 Grad austritt. Die Lichtquelle 42 kann von einer oder mehreren LEDs gebildet werden. Statt einer oder mehrerer LEDs kann auch eine Glühbirne als Lichtquelle dienen. Der Lichtleiter 44 kann aus Kunststoff bestehen, beispielsweise aus Plexiglas.

Das Schnüffelrohr 20 und der Lichtleiter 44 können starr oder flexibel ausgebildet sein.

Durch Vorsehen einer Beleuchtungsvorrichtung am distalen Ende des Schnüffelrohres 20 wird die Region, in der nach einem Gasleck gesucht wird, gut ausgeleuchtet, so dass die zu prüfenden Gegenstände, beispielsweise Rohre, Dichtungen, Anschlüsse etc. besser erkennbar sind. Es ist nicht erforderlich, das gesamte Messobjekt auszuleuchten. Durch den Lichtaustritt an dem distalen Ende des Schnüffelrohres kann der Benutzer den Abstand und die genaue Ausrichtung des Schnüffelrohres bzw. der Gaseintrittsöffnung zur zu untersuchenden Stelle an der Form des Lichtkegels und anhand der Schattenwürfe gut erkennen und abschätzen.

## Patentansprüche

1. Schnüffelsonde (11) für die Detektion eines Leckgases, mit einem Handstück (14), das eine Gaseintrittsöffnung (22) aufweist, und das mit einer Beleuchtungsvorrichtung (25) zum Ausleuchten des distal vor der Gaseintrittsöffnung (22) liegenden Bereichs versehen ist,
**dadurch gekennzeichnet,**
**dass** der Schnüffelsonde (11) ein Messbereitschafts-Schalter (32) zugeordnet ist, welcher so ausgestaltet ist, dass er die Beleuchtungsvorrichtung (25) einschaltet, wenn Messbereitschaft der Schnüffelsonde vorliegt, und die Beleuchtungsvorrichtung abschaltet, wenn keine Messbereitschaft der Schnüffelsonde vorliegt.

2. Schnüffelsonde (11) nach Anspruch 1, **dadurch gekennzeichnet, dass** der Lichtaustritt (28) der Beleuchtungsvorrichtung (25;40) im Bereich der Gaseintrittsöffnung (22) angeordnet ist.

3. Schnüffelsonde (11) nach Anspruch 1 oder 2, **dadurch gekennzeichnet, dass** die Beleuchtungsvorrichtung (25) als Lichtquelle (26;42) eine LED aufweist.

4. Schnüffelsonde (11) nach einem der Ansprüche 1 - 3, **dadurch gekennzeichnet, dass** die Lichtquelle (26;42) der Beleuchtungsvorrichtung (25) weißes Licht ausstrahlt.

5. Schnüffelsonde (11) nach einem der Ansprüche 1, 3 oder 4, **dadurch gekennzeichnet, dass** die Lichtquelle (42) von der Gaseintrittsöffnung (22) entfernt angeordnet ist und ein Lichtleiter (44) vorgesehen ist, dessen Lichtaustritt (46) im Bereich der Gaseintrittsöffnung (22) angeordnet ist.

6. Schnüffelsonde (11) nach einem der Ansprüche 1 - 5, **dadurch gekennzeichnet, dass** der Schnüffelsonde (11) ein Grenzwert-Schalter (34) zugeordnet ist, der die Beleuchtungsvorrichtung (25) derart ansteuert, dass sich die Beleuchtung bei Überschreiten eines Leckgas-Grenzwertes ändert.

7. Schnüffelsonde (11) nach Anspruch 6, **dadurch gekennzeichnet, dass** die Beleuchtungsvorrichtung (25) derart ausgebildet ist, dass sich die Farbe des ausgestrahlten Lichtes verändert, wenn der Leckgas-Grenzwert überschritten wird.

## Claims

1. A sniffing probe (11) for detecting a leaking gas, comprising a handle-piece (14) having a gas inlet opening (22) and being provided with an illumination device (25) for illuminating the region distal to the gas inlet opening (22),
**characterized in that**
the sniffing probe (11) has associated therewith a ready-for-measurement switch (32) which is configured such that it switches on the illumination device (25) when the sniffing probe is ready for measurement and switches off the illumination device when the sniffing probe is not ready for measurement.

2. The sniffing probe (11) according to claim 1, **characterized in that** the light outlet (28) of the illumination device (25;40) is arranged in the region of the gas inlet opening (22).

3. The sniffing probe (11) according to claims 1 or 2, **characterized in that** the illumination device (25) comprises an LED as a light source (26;42).

4. The sniffing probe (11) according to any one of claims 1 to 3, **characterized in that** the light source (26;42) of the illumination device (25) emits white light.

5. The sniffing probe (11) according to any one of claims 1, 3, or 4, **characterized in that** the light source (42) is arranged remote from the gas inlet opening (22), and a light conductor (44) is provided whose light output (46) is disposed in the region of the gas inlet opening (22).

6. The sniffing probe (11) according to any one of claims 1 to 5, **characterized in that** the sniffing probe (11) has associated therewith a limit value switch (34) which controls the illumination device (25) such that the illumination changes when a leaking gas limit value is exceeded.

7. The sniffing probe (11) according to claim 6, **characterized in that** the illumination device (25) is configured such that the color of the emitted light changes when the leaking gas limit value is exceeded.

## Revendications

1. Renifleur (11) pour la détection d'un gaz de fuite, comprenant une pièce à main (14) comprenant une ouverture d'admission de gaz (22) et munie d'un dispositif d'illumination (25) pour illuminer la zone située distalement avant ladite ouverture d'admission de gaz (22),
**caractérisé en ce**
**qu'**un commutateur de disponibilité pour la mesure (32) est associé audit renifleur (11), ledit commutateur activant ledit dispositif d'illumination (25) si le renifleur est prêt à mesurer et désactivant ledit dispositif d'illumination si le renifleur n'est pas prêt à mesurer.

2. Renifleur (11) selon la revendication 1, **caractérisé en ce que** la sortie de lumière (28) du dispositif d'illumination (25; 40) est disposée dans la région de l'ouverture d'admission de gaz (22).

3. Renifleur (11) selon la revendication 1 ou 2, **caractérisé en ce que** ledit dispositif d'illumination (25) comprend une LED comme source de lumière (26; 42).

4. Renifleur (11) selon l'une quelconque des revendications 1 - 3, **caractérisé en ce que** la source de lumière (26; 42) dudit dispositif d'illumination (25) émet de la lumière blanche.

5. Renifleur (11) selon l'une quelconque des revendications 1, 3 ou 4, **caractérisé en ce que** ladite source de lumière (42) est disposée écartée de ladite ouverture d'admission de gaz (22), et qu'un conduit de lumière (44) est prévu, dont la sortie de lumière (46) est disposée dans la région de ladite ouverture d'admission de gaz (22).

6. Renifleur (11) selon l'une quelconque des revendications 1 - 5, **caractérisé en ce qu'**un commutateur à seuil (34) est associé audit renifleur (11), ledit commutateur commandant ledit dispositif d'illumination (25) de sorte que l'illumination change lorsqu'un seuil de gaz de fuite est dépassé.

7. Renifleur (11) selon la revendication 6, **caractérisé en ce que** le dispositif d'illumination (25) est configuré de sorte que la couleur de la lumière émise change si le seuil de gaz de fuite est dépassé.
